# EUROPEAN PATENT APPLICATION

(11) **EP 4 700 443 A1**
(43) Date of publication of application: **25.02.2026**
(21) Application number: 25782361.7
(22) Date of filing: 12.02.2025
(51) Int. Cl.: G02B 5/00, G02B 5/04

(54) **METHOD FOR MANUFACTURING LOUVER FILM**

(30) Priority: 05.04.2024 JP 2024061410
(71) Applicant: Beam Electronics Industrial Co., Ltd., Matsumoto-shi, Nagano 390-1242 (JP)
(72) Inventor: AGATA Yuki, Matsumoto-shi, Nagano 390-1242 (JP)
(74) Representative: Plougmann Vingtoft a/s
(86) International application number: PCT/JP2025/004462
(87) International publication number: WO 2025/211023

(57) **Abstract**

A louver film (1) with an optical functional layer (2) in which light-transmitting portions (4) and louvers (3) are alternately aligned is manufactured through a first step (S1), a second step (S2), and a third step (S3). In the second step (S1), a first member (10) and a second member (20) formed in the first step (S1) are stacked such that first convex portions (11) protruding from a first light-transmitting layer (5) of the first member (10) face second convex portions (21) protruding from a second light-transmitting layer (6) of the second member (20), a molding material (30) is supplied between the two members, and the second convex portions (21) are brought into contact with the first convex portions (11). As a result, gaps (40), which are the difference in shape between the first convex portions (11) and the second convex portions (21), are formed at a predetermined array pitch between the first light-transmitting layer (5) and the second light-transmitting layer (6), and the gaps (40) are filled with the molding material (30). In the third step (S3), the molding material (30) is cured to form the louvers (3).

## Description

### Field

The present invention relates to a method of manufacturing a louver film with an optical functional layer in which light-transmitting portions and louvers are alternately aligned.

### Background

Traditionally, louver films have been used, which have an optical functional layer in which louvers that absorb or reflect light and light-transmitting portions are alternately aligned. This type of louver film is used in various applications. For example, the louver films are attached to display screens of mobile terminals and the like to protect privacy and prevent disturbing reflections and light leakage. The louver films are also used to block unnecessary light (ambient light) and transmit necessary light (projection light) in a screen on which images are projected. Alternatively, they are also used for goggles, sunglasses, building materials, and the like.

Patent Literatures 1 and 2 describe this type of louver film. The louver film in Patent Literature 1 has a louver layer in which light-absorbing portions (louvers) and light-transmitting portions are alternately arranged, and is joined to a surface of a liquid crystal panel with an adhesive layer interposed. The light-absorbing portions and the light-transmitting portions extend linearly in a direction orthogonal to the array direction. The light-absorbing portions have, for example, a trapezoidal shape in cross section.

The louver film in Patent Literature 1 is manufactured by the following method. First, a resin material is supplied to a mold having an inverted shape of the light-transmitting portions, cured, and then released from the mold. This process manufactures a film with grooves between the light-transmitting portions aligned at a constant pitch. Next, a material for forming the light-absorbing portions, for example, a UV-curable resin, is filled into the grooves, the resin that protrudes from the grooves is removed, and the material is cured by applying UV light. This process forms the light-absorbing portions (louvers).

Patent Literature 2 describes a louver element placed in an optical path of a head-mounted display. The louver element in Patent Literature 2 has a structure in which light-blocking layers aligned at a constant pitch are sandwiched between a light-transmitting resin member (first member) with triangular prism-shaped convex portions aligned in a sawtooth pattern and a light-transmitting resin member (second member) with a similar structure. The first and second members have surfaces in contact with each other that constitute the oblique sides of prism shapes, and the light-blocking layer is sandwiched between the side surfaces that constitute the short sides of the prism shapes.

The louver element of Patent Literature 2 is manufactured by the following method. First, a resin material is applied to a mold to form the first member with prism-shaped convex portions aligned in a sawtooth pattern, and then released from the mold. Next, a paint or the like is applied to the side surfaces that constitute the short sides of the prism shapes, and heated and cured to form the light-blocking layers. A resin material is then supplied from above the light-blocking layers, and the resin material is filled in the grooves between adjacent prism shapes, and then cured. This process manufactures the second member so that the light-blocking layer is sandwiched between the first member and the second member.

### Citation List

### Patent Literature

Patent Literature 1: Japanese Patent Application Laid-Open Publication No. 2018-45052
Patent Literature 2: Japanese Patent Application Laid-Open Publication No. 2023-60578

### Summary

### Technical Problem

The manufacturing method in Patent Literature 1 requires that the grooves between the light-transmitting portions to be formed first should have the inverted shape of the light-absorbing portions (louvers). However, to increase the inclination angle of the louvers, the inclination angle of the grooves must be increased. In this case, this may increase the manufacturing difficulty, and depending on the inclination angle, the manufacturing may be difficult. In addition, it is difficult to manufacture the grooves in an undercut shape.

On the other hand, the manufacturing method in Patent Literature 2 applies a paint, which is a material of the light-blocking layers (louvers), to the surfaces of the prisms, so the flexibility in the inclination of the louvers is higher than in the manufacturing method in Patent Literature 1. However, since the light-blocking layers are formed by heating and curing the coating film, it is difficult to increase the thickness of the louvers, and it is difficult to create a shape whose thickness changes in the middle. The flexibility in the shape of the louvers is therefore low.

In view of the above problems, an object of the present invention is to propose a method of manufacturing a louver film that can increase the flexibility in the shape and inclination angle of the louvers while avoiding the increased manufacturing difficulty.

### Solution to Problem

In order to solve the above problem, an aspect of the present invention provides a method of manufacturing a louver film with an optical functional layer in which light-transmitting portions and louvers are alternately aligned. The method includes: a first step of manufacturing a first member and a second member, the first member including a first light-transmitting layer and a plurality of first convex portions protruding from the first light-transmitting layer, the second member including a second light-transmitting layer and a plurality of second convex portions protruding from the second light-transmitting layer and aligned at the same array pitch as the first convex portions; a second step of, when supplying a molding material between the first member and the second member to laminate the first member and the second member together, bringing the second convex portions into contact with the first convex portions, respectively, to form the light-transmitting portions aligned at the array pitch and form a gap filled with the molding material between the light-transmitting portions adjacent to each other; and a third step of curing the molding material to form the louvers between the first light-transmitting layer and the second light-transmitting layer, each of the louvers having a shape matching the gap.

In the manufacturing method in this aspect, the louvers are molded by using the gap created between the first convex portion in the first member and the second convex portion in the second shape. In this way, it is possible to form a gap having an undercut shape or form a gap having a large inclination angle, and even in such cases, the difficulty in manufacturing the first and second members does not increase. Accordingly, the flexibility in the shape and inclination of the louvers can be increased, and furthermore, the increased manufacturing difficulty can be avoided.

In addition, the manufacturing method in this aspect can improve the shape accuracy of the louvers, compared with the method of forming the louvers using a coating film, because the shape accuracy of the louvers is approximately equal to the shape accuracy of the first and second convex portions. In addition, it is easy to accommodate larger size of the first and second members, and it is easy to accommodate larger size of the louver film. In addition, the first and second light-transmitting layers can be used as protective layers to cover the optical functional layer after the louvers are molded. A step of providing a separate protective layer therefore can be omitted.

In the above aspect, it is preferable that the array pitch is 5 µm or more and 500 µm or less. With this configuration, louvers of various sizes can be formed, making it possible to form an optical functional layer that can be used for various applications.

In the above aspect, it is preferable that in the first step, a UV-curable resin is supplied to a first mold surface with an inverted shape of the first convex portions aligned, cured under pressure through a first substrate layer, and then released from the first mold surface to form the first light-transmitting layer in a two-layer structure in which the first substrate layer is joined to a first base layer integrally formed with the first convex portions, and a UV-curable resin is supplied to a second mold surface with an inverted shape of the second convex portions aligned, cured under pressure through a second substrate layer, and then released from the second mold surface to form the second light-transmitting layer in a two-layer structure in which the second substrate layer is joined to a second base layer integrally formed with the second convex portions. With such a manufacturing method, all the first and second convex portions can be formed at once on the surfaces of large first and second members. It is therefore easy to accommodate larger sizes.

In the above aspect, it is preferable that both the first base layer and the second base layer have a thickness of 100 µm or less. When the thickness of the base layer, which does not affect optical properties, is set to 100 µm or less, the louver film as a whole can be made thinner.

In the above aspect, a UV-curable ink with a bonding function or an adhesive function is preferred. Such a molding material is easy to fill the gap. The molding material can be cured by applying UV light from above the first and second base layers.

In the above aspect, it is preferable that at least a part of the louver has a thickness of 3 µm or more. This configuration can ensure a thickness that provides a light control function.

In the above aspect, it is preferable that each of the first convex portions is a first prism having a triangular cross-sectional shape with a first face and a second face intersecting the first face, and each of the second convex portions is a second prism having a triangular cross-sectional shape with a third face and a fourth face intersecting the third face. An inclination angle of the first face with respect to the first light-transmitting layer is same as an inclination angle of the third face with respect to the second light-transmitting layer. In the second step, the first face and the third face are brought into contact with each other to form the gap between the second face and the fourth face. In this way, by setting the inclination of the slope of the prism and the height of the prism as appropriate, louvers with various inclination angles, thicknesses, and shapes can be formed without increasing the manufacturing difficulty.

In the above aspect, it is preferable that an inclination angle of the second face with respect to the first light-transmitting layer is different from an inclination angle of the fourth face with respect to the second light-transmitting layer, and in the second step, the gap having a wedge-shaped cross-sectional shape surrounded by the second and fourth faces is formed. In this way, the louver having a wedge-shaped cross-sectional shape produces a light control effect that is different from that of a louver with a constant thickness. For example, the amount of light transmitted changes gradually as the angle of incidence changes, producing a light control effect that gradually darkens or brightens. In addition, compared with a louver with a constant thickness, the longer peripheral distance and smaller volume allow UV light or the like to be transmitted more efficiently. As a result, the risk of remaining uncured molding material can be reduced.

In the above aspect, it is preferable that the second face is perpendicular to the first light-transmitting layer, and the fourth face is perpendicular to the second light-transmitting layer. In the second step, the gap having a constant width and being perpendicular to the first and second substrate layers is formed between the second face and the fourth face. In this way, it is possible to form plate-like louvers that are perfectly perpendicular to the incident plane of the optical functional layer and have a uniform thickness.

In the above aspect, it is preferable that both the first prism and the second prism have a vertex angle greater than 10°. In this way, the increased difficulty in manufacturing prisms can be avoided. In addition, the tips of the prisms are less likely to be deformed, thereby suppressing reduction in shape accuracy of the louvers.

In the above aspect, it is preferable that each of the first convex portions is a first prism having a trapezoidal cross-sectional shape with a first upper base surface, a first slope connected to one end of the first upper base surface, and a second slope connected to another end of the first upper base surface, and each of the second convex portions is a second prism having a trapezoidal cross-sectional shape with a second upper base surface of the same length as the first upper base surface, a third slope connected to one end of the second upper base surface, and a fourth slope connected to another end of the second upper base surface. In the second step, the second upper base surface of the second prism is brought into contact with the first upper base surface of the first prism to form the gap surrounded by the first and third slopes facing each other and by the second and fourth slopes facing each other. In this way, the trapezoidal shape of the prism can ensure the width of the light-transmitting portion between the louvers even when the inclination angle of the louvers is increased.

In the above aspect, it is preferable that the first prism and the second prism have the same shape. In this way, the number of types of members can be reduced, thereby reducing management costs. In addition, the number of types of mold members used in the manufacturing can be reduced, thereby reducing manufacturing costs.

In the above aspect, it is preferable that an angle between the first slope and the second slope and an angle between the third slope and the fourth slope are both 60° or more and 120° or less. In this way, the corner angle of the louver can be in the range close to 90° (60° or more and 120° or less). In this configuration, the cross-sectional shape of the louver can be nearly rectangular.

In the above aspect, it is preferable that an angle between the first slope and the second slope and an angle between the third slope and the fourth slope are both 90°, and the second slope and the fourth slope each have a length of 2 or more and 5 or less, where the first slope and the third slope each have a length of 1. When the corner angle of the louver is 90°, the cross-sectional shape of the louver is rectangular. In this configuration, the amount of light transmitted changes abruptly at a specific angle of incidence, producing a light control effect that switches light incidence on and off at the specific angle of incidence. In addition, since the dimensional ratio between the short and long sides of the louver is large, the change in the amount of light transmitted in light control can be increased.

In the above aspect, it is preferable that both the first upper base surface and the second upper base surface have a length of 1 µm or more and 100 µm or less. With this configuration, light-transmitting portions of various widths can be formed, making it possible to form an optical functional layer that can be used for various applications.

### Advantageous Effects of Invention

The present invention can increase the flexibility in the shape and inclination of the louvers and, in addition, avoid increased manufacturing difficulty.

### Brief Description of Drawings

FIG. 1 is a schematic perspective view of a configuration of a louver film of a first embodiment as viewed from an end surface.
FIG. 2 is an illustration of the louver film in use.
FIG. 3 is a flowchart of a method of manufacturing a louver film.
FIG. 4 is an illustration of the method of manufacturing the louver film of the first embodiment (first step).
FIG. 5 is an illustration of the method of manufacturing the louver film of the first embodiment (second step).
FIG. 6 is an illustration of the method of manufacturing the louver film of the first embodiment (third step).
FIG. 7 is an illustration of the louver film manufactured using first and second members manufactured by extrusion molding.
FIG. 8 is a cross-sectional view of a louver film of a first modification.
FIG. 9 is a cross-sectional view of a louver film of a second embodiment.
FIG. 10 is a cross-sectional view of a louver film of a second modification.
FIG. 11 provides a cross-sectional view of a louver film of a third embodiment, a partially enlarged cross-sectional view of the first member, and a partially enlarged cross-sectional view of the second member.
FIG. 12 provides cross-sectional views of louver films of third and fourth modifications.

### Description of Embodiments

Embodiments of the present invention will be described below with reference to the drawings.

### (First Embodiment)

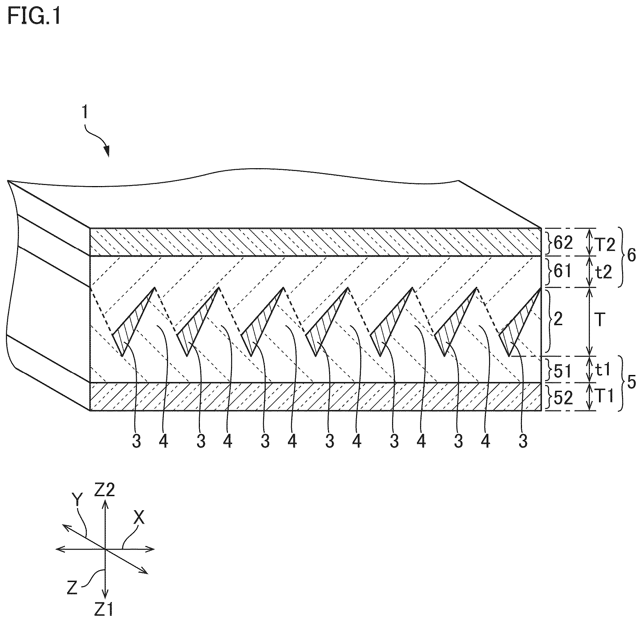

FIG. 1 is a schematic perspective view of a configuration of a louver film 1 of a first embodiment as viewed from an end surface. As illustrated in FIG. 1, the louver film 1 includes an optical functional layer 2. The optical functional layer 2 includes a plurality of louvers 3 and a plurality of light-transmitting portions 4, which are alternately aligned in a certain array direction X. The louvers 3 and the light-transmitting portions 4 each extend linearly in a Y direction orthogonal to the array direction X. The optical functional layer 2 is parallel to an XY plane and has a constant thickness in a Z direction perpendicular to the XY plane. As used herein "film" in "louver film" is intended to include those called "sheet" generally distinguished from "film" by thickness. The "film" is intended to include soft and hard films.

The louver film 1 includes a first light-transmitting layer 5 overlying on one side in the thickness direction (Z1 direction illustrated in FIG. 1) of the optical functional layer 2 and a second light-transmitting layer 6 overlying on the other side in the thickness direction (Z2 direction illustrated in FIG. 1) of the optical functional layer 2. In the example illustrated in FIG. 1, the first light-transmitting layer 5 and the second light-transmitting layer 6 each include a plurality of layers. The first light-transmitting layer 5 includes a first base layer 51 formed integrally with parts of the light-transmitting portions 4 and a first substrate layer 52 joined to the first base layer 51. The second light-transmitting layer 6 includes a second base layer 61 formed integrally with parts of the light-transmitting portions 4 and a second substrate layer 62 joined to the second base layer 61.

The light-transmitting portions 4, the first base layer 51, and the second base layer 61 are made of light-transmitting materials with the same refractive index. In the present embodiment, the light-transmitting portions 4, the first base layer 51, and the second base layer 61 are made of the same material. More specifically, the light-transmitting portions 4, the first base layer 51, and the second base layer 61 are made of a UV-curable resin. The thickness T of the optical functional layer 2 is described below. The thickness t1 of the first base layer 51 and the thickness t2 of the second base layer 61 are described below.

The first substrate layer 52 and the second substrate layer 62 are made of a light-transmitting resin such as polyethylene terephthalate (PET), polycarbonate, and polymethyl methacrylate (PMMA). The first substrate layer 52 and the second substrate layer 62 may be a resin different from these resins. For the thickness T1 of the first substrate layer 52 and the thickness T2 of the second substrate layer 62, 38 µm to 250 µm is suitable when PET is used, and 100 µm to 500 µm is suitable when polycarbonate is used.

The louvers 3 have optical properties different from those of the light-transmitting portions 4. In the present embodiment, the louvers 3 are made of a light-absorbing material, and the optical functional layer 2 changes its light transmission state depending on the direction of incidence. In the present embodiment, the louvers 3 are manufactured by curing a UV-curable molding material. More specifically, a UV-curable ink with a bonding function or an adhesive function is colored with a dye or a pigment to impart a light-absorbing function to the molding material. The dye or pigment used for coloring contains, for example, fine particles of carbon, iron, titanium, chromium, aluminum, or the like.

The louver film 1 can be manufactured in a planar size that allows for affixation to large screens, monitors, windows, and the like by a manufacturing method described below. For example, a planar size of 120 inches (diagonal dimension 3048 mm) can be manufactured. In the schematic perspective view in FIG. 1, the louver film 1 has a small planar size, but the actual planar size can be increased as described above.

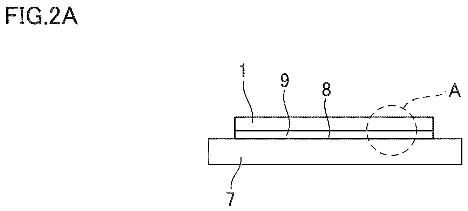

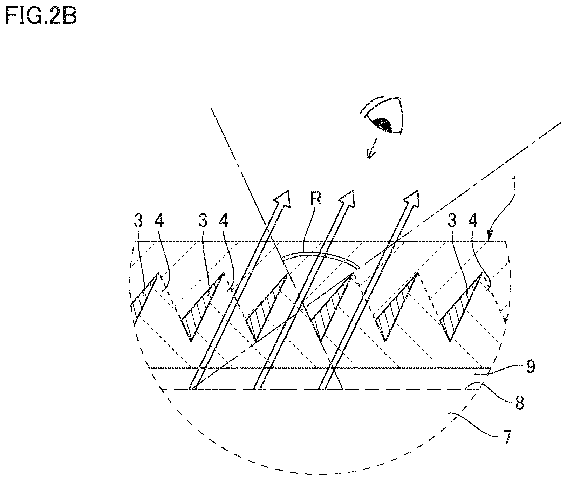

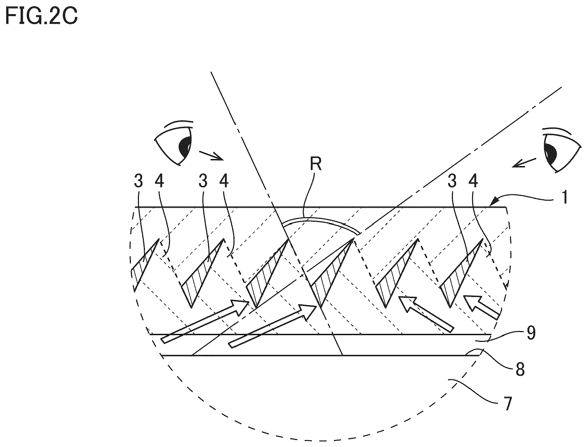

FIG. 2 is an illustration of the louver film 1 in use. FIG. 2(a) illustrates a state in which the louver film 1 is joined via an adhesive layer 9 to a display surface 8 that emits image light in a display device 7 that displays images and the like (for example, a liquid crystal panel of a mobile terminal). In FIG. 2(a), the thickness of the louver film 1 and the thickness of the adhesive layer 9 are depicted larger than they actually are to make the structure easier to understand. The adhesive layer 9 is preferably made of a transparent material that does not impair the visibility and optical properties of the display surface 8. For example, silicone-based pressure-sensitive adhesive (PSA), acrylic-based PSA, or the like can be used as the adhesive layer 9.

The louver film 1 may include only the first light-transmitting layer 5, the optical functional layer 2, and the second light-transmitting layer 6 illustrated in FIG. 1. However, the louver film 1 is preferably treated as a product with the adhesive layer 9 stacked on the Z1-side surface of the first light-transmitting layer 5 or the Z2-side surface of the second light-transmitting layer 6 and with a release film (not illustrated) stacked on a surface of the adhesive layer 9. For example, a PET film of about 50 µm thickness can be used as the release film. In addition, other functional layers or a protective layer may be stacked on a surface opposite to the adhesive layer 9.

FIG. 2(b) and FIG. 2(c) are partially enlarged views of area A in FIG. 2(a). As illustrated in FIG. 2(b), when the user views the display surface 8 from an angle within a viewing angle range R determined by the shape, array pitch, and inclination angle of the louvers 3, light passing through the gap between the louvers 3 reaches the user. The user therefore can see an image displayed on the display surface 8. In this case, when the user views the image from a direction that agrees with the inclination angle of the louvers 3, the aperture ratio, which indicates the ratio of the region that transmits light, is the largest, and the amount of light transmitted is the largest. The image therefore looks brightest. On the other hand, as illustrated in FIG. 2(c), when the user views the display surface 8 from an angle outside the viewing angle range R, light cannot pass through the gap between the louvers 3 and is entirely incident on and absorbed by the louvers 3. The user is therefore unable see the image displayed on the display surface 8. In other words, in the use situation illustrated in FIG. 2, the louver film 1 functions as a viewing angle control film or a privacy film.

The louver film 1 is a light control film in which the presence or absence of transmission of incident light rays changes with the angle of incidence, and can be used in various applications. For example, in addition to the above viewing angle control film or privacy film applications, the louver film 1 can be used as an antireflection film. For example, the louver film 1 can be used by being affixed to windows of buildings, windows of movable bodies such as cars, sunglasses, goggles, and the like. Alternatively, the louver film 1 can be used by being affixed to a screen on which video light is projected. The louver film 1 can also be used as an optical filter.

### (Method of Manufacturing Louver Film)

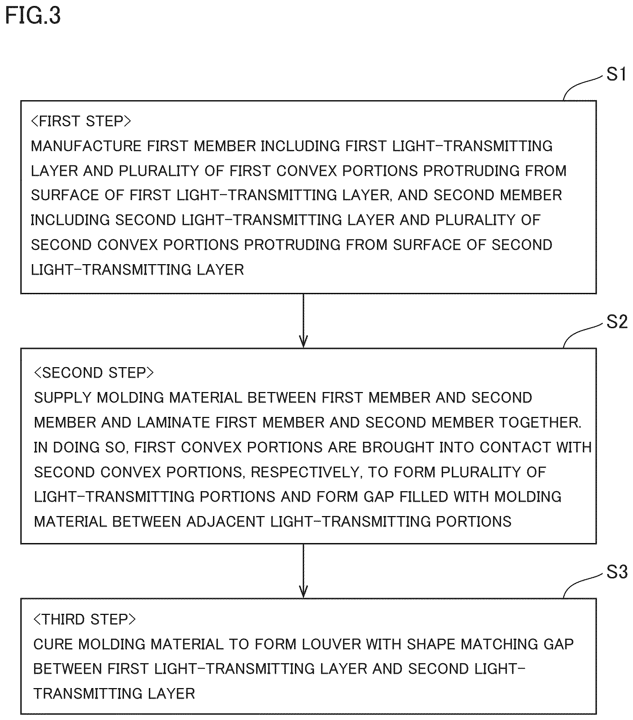

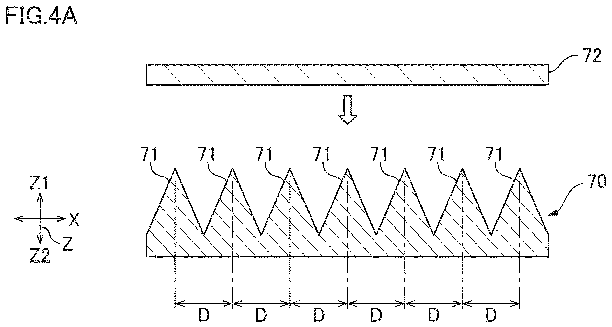

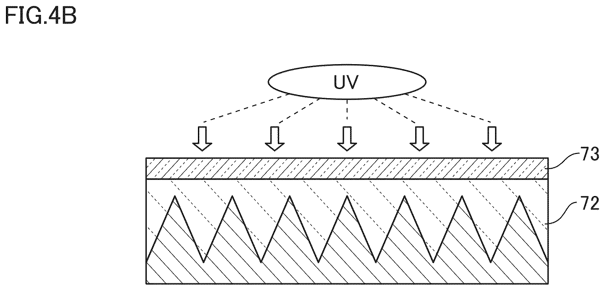

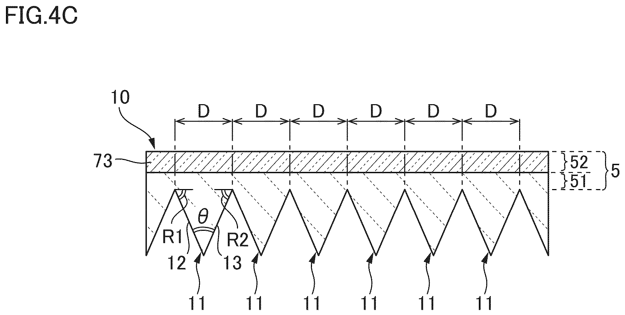

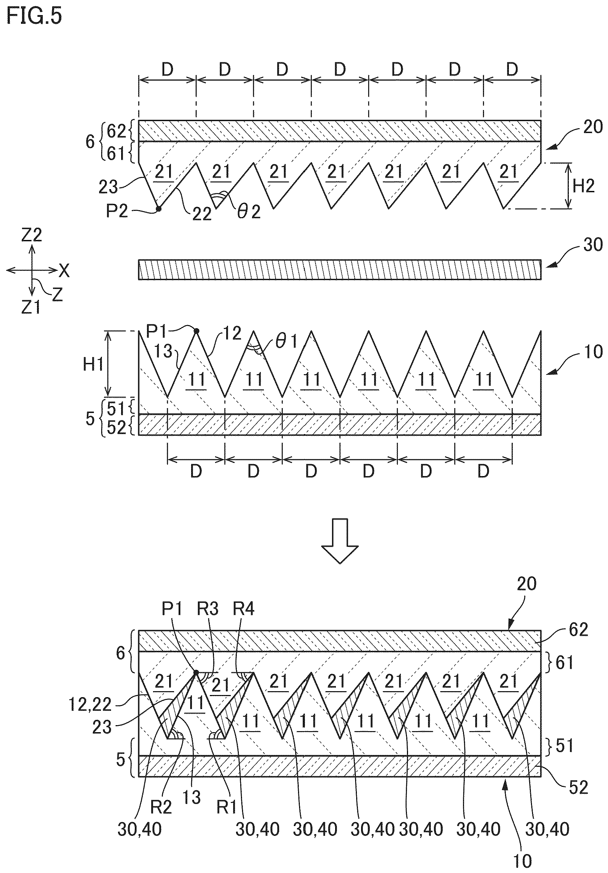

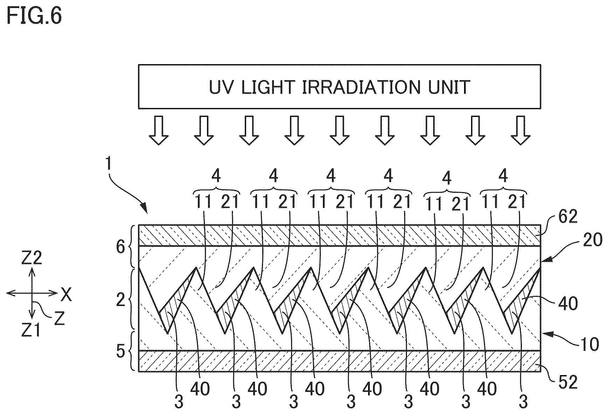

FIG. 3 is a flowchart of a method of manufacturing the louver film 1. FIGS. 4, 5, and 6 are illustrations of the method of manufacturing the louver film 1. As illustrated in FIG. 3, the method of manufacturing the louver film 1 includes a first step S1, a second step S2, and a third step S3. FIG. 4 illustrates the first step S1. FIG. 5 illustrates the second step S2. FIG. 6 illustrates the third step S3.

### (First Step)

In the first step S1, a first member 10 and a second member 20 are manufactured from a light-transmitting resin material. In the present embodiment, the louver film 1 is manufactured by laminating the film-like first member 10 and second member 20 together. Since the manufacturing methods for the first member 10 and the second member 20 are the same, FIG. 4 illustrates the manufacturing method for the first member 10 as a representative.

In manufacturing the first member 10 and the second member 20, their shapes are set as follows. As illustrated in FIG. 4(c) and FIG. 5(a), the first member 10 includes the first light-transmitting layer 5 and a plurality of first convex portions 11 protruding from a surface of the first light-transmitting layer 5 and aligned in the X direction along the surface of the first light-transmitting layer 5. In the present embodiment, the first light-transmitting layer 5 has a two-layer structure in which the first base layer 51 and the first substrate layer 52 are joined. The first convex portions 11 are formed integrally with the first base layer 51. The first convex portions 11 have the same shape, and the array pitch of the first convex portions 11 is an equal pitch D. Each of the first convex portions 11 extends linearly in a direction perpendicular to the drawing sheet of FIG. 4 (a direction orthogonal to the X direction and orthogonal to the Z direction).

As illustrated in FIG. 5(a), the second member 20 includes the second light-transmitting layer 6 and a plurality of second convex portions 21 protruding from a surface of the second light-transmitting layer 6 in the Z1 direction and aligned in the X direction along the surface of the second substrate layer at the same array pitch as the first convex portions 11. The second light-transmitting layer 6 has a two-layer structure in which the second base layer 61 and the second substrate layer 62 are joined, in the same manner as the first member 10. The second convex portions 21 are formed integrally with the second base layer 61. In the second member 20, the second convex portions 21 have the same shape, and the array pitch of the second convex portions 21 is an equal pitch D. Each of the second convex portions 21 extends linearly in a direction perpendicular to the drawing sheet of FIG. 4 (a direction orthogonal to the X direction and orthogonal to the Z direction).

The first convex portion 11 is a first prism with a triangular cross-sectional shape. The width of the base of the first prism is the same as the array pitch of the first prism (i.e., equal pitch D). Thus, a plurality of first prisms are aligned in a sawtooth pattern on the surface of the first member 10. The first prism has a first face 12 and a second face 13 that intersect at its vertex P1 in a direction forming a vertex angle θ1.

The second convex portion 21 is a second prism with a triangular cross-sectional shape. The width of the base of the second prism is the same as the array pitch of the second prism (i.e., equal pitch D). Thus, a plurality of second prisms are aligned in a sawtooth pattern on the surface of the second member 20. The second prism has a third face 22 and a fourth face 23 that intersect at its vertex P2 in a direction forming a vertex angle θ2.

The second prism has the same width at the base as the first prism, but the protruding height H2 of the second prism is lower than the protruding height H1 of the first prism. Therefore, the vertex angle θ2 of the second prism is greater than the vertex angle θ1 of the first prism. The first and second prisms are suitable to be shaped so that the vertex angles θ1 and θ2 are greater than 10°. If the vertex angles θ1 and θ2 are greater than 10°, the increased difficulty in manufacturing prisms can be avoided. In addition, there is little risk of prism tip deformation. Therefore, there is little risk of loss of shape accuracy of the louvers 3.

The protruding height H1 of the first prism and the protruding height H2 of the second prism are both suitable to be 1 µm or more and 500 µm or less. In the present embodiment, the protruding height H1 of the first prism and the thickness T of the optical functional layer 2 (see FIG. 1) are the same. The thickness T of the optical functional layer 2 is therefore 1 µm or more and 500 µm or less. The array pitch of the first convex portions 11 and the array pitch of the second convex portions 21 (i.e., dimension D) are suitable to be 5 µm or more and 500 µm or less. In this way, the optical functional layer 2 that can be used for various applications can be formed.

In the first step S1, the first member 10 and the second member 20 are manufactured by 2P molding. FIG. 4(a) illustrates a step of supplying an uncured resin 72 to a first mold surface 70. FIG. 4(b) illustrates a step of curing the uncured resin 72 under pressure through a substrate film 73. FIG. 4(c) illustrates the first member 10 released from the mold. As illustrated in FIG. 4(a), the mold used to manufacture the first member 10 has the first mold surface 70 with concave portions 71 aligned at a constant pitch. The shape of the concave portions 71 is an inverted shape of the first convex portions 11. The array pitch of the concave portions 71 is an equal pitch D. First, as illustrated in FIG. 4(a), the uncured resin 72 is supplied to the first mold surface 70. For example, the uncured resin 72 is applied to the first mold surface 70. Next, as illustrated in FIG. 4(b), the uncured resin 72 is cured under pressure through the substrate film 73. The substrate film 73 is made of, for example, PET, polycarbonate, or PMMA. A UV-curable resin is used as the uncured resin 72. Thus, UV light is applied from above the UV-transmitting substrate film 73 to cure the uncured resin 72. As illustrated in FIG. 4(c), the first member 10 is then released from the mold.

As illustrated in FIG. 4(c), the completed first member 10 is a composite member in which the first convex portions 11 are transferred to the surface of the first base layer 51, which is the cured UV-curable resin, and the first base layer 51 is joined to the substrate film 73. The substrate film 73 constitutes the first substrate layer 52. Similarly, the second member 20 can be manufactured using a mold with a second mold surface having an inverted shape of the second convex portions 21 instead of the first convex portions 11.

In the first step S1, the thickness t1 of the first base layer 51 and the thickness t2 of the second base layer 61 are preferably 100 µm or less. By reducing the thicknesses t1 and t2 of the first base layer 51 and the second base layer 61, which do not affect optical properties, the louver film 1 as a whole can be made thinner. In the present embodiment, the thicknesses t1 and t2 are the same, but may be different.

In the first step S1, the supply of uncured resin 72 can be reduced so that the first base layer 51 is not formed. In this case, the first light-transmitting layer 5 includes only the first substrate layer 52. The second member 20 can also have the same configuration. However, the appearance of the louver film 1 is improved if the first base layer 51 and the second base layer 61 are provided.

### (Second Step)

FIG. 5 illustrates the second step S2. In the second step S2, as illustrated in the upper drawing of FIG. 5, the first member 10 and the second member 20 are laminated together such that the first convex portions 11 (first prisms) and the second convex portions 21 (second prisms) face each other. At this time, a molding material 30 is supplied between the first convex portions 11 and the second convex portions 21 before lamination. For example, a molding material (in the present embodiment, UV-curable ink) is applied to the first convex portions 11 or the second convex portions 21. Then, as illustrated in the lower diagram of FIG. 5, the tip of the second convex portion 21 is inserted into a valley between adjacent first convex portions 11. In the first and second prisms, the inclination angle R1 of the first face 12 with respect to the first light-transmitting layer 5 is the same as the inclination angle R3 of the third face 22 with respect to the second light-transmitting layer 6. In the second step S2, therefore, the third face 22 of the second convex portion 21 can be brought into contact with the first face 12 of each of the first convex portions 11. The first convex portion 11 and the second convex portion 21, with the first face 12 and the third face 22 in close contact with each other, constitute the light-transmitting portion 4.

On the other hand, in the first and second prisms, the inclination angle R2 of the second face 13 with respect to the first light-transmitting layer 5 is different from the inclination angle R4 of the fourth face 23 with respect to the second light-transmitting layer 6, and the second face 13 and the fourth face 23 are inclined in a direction forming an acute angle. Thus, as illustrated in the lower diagram of FIG. 5, when the vertex P1 of the first prism comes into abutment with a valley between the second prisms, a wedge-shaped gap 40 is formed between the second face 13 and the fourth face 23. At the same time, the molding material 30 fills the gap 40. In this way, in the second step S2, a plurality of light-transmitting portions 4 aligned at the equal pitch D are formed, and at the same time, the gap 40 filled with the molding material 30 is formed between adjacent light-transmitting portions 4.

### (Third Step)

FIG. 6 illustrates the third step S3. Subsequently, in the third step S3, the molding material 30 filling each gap 40 is cured to form the louver 3 with a shape (in the present embodiment, wedge-shaped) that matches the gap 40. Since the first member 10 and the second member 20 are light-transmitting, the molding material 30 filling the gap 40 can be cured by applying UV light from outside, as illustrated in FIG. 5. As the molding material 30 is cured, the optical functional layer 2 is formed with the louvers 3 and the light-transmitting portions 4 alternately aligned in the X direction.

In the second step S2 and the third step S3, various materials having different optical properties from the resin forming the light-transmitting portions 4 can be used as the molding material 30 for forming the louvers 3. For example, a light-reflective molding material may be used instead of a light-absorbing material. In this case, the louver film 1 with light-reflective louvers 3 can be manufactured. Alternatively, a molding material that can form light-transmitting louvers 3 with a refractive index different from that of the light-transmitting portions 4 can be used as the molding material 30 for forming the louvers 3. For example, the molding material 30 is selected so that light incident on the light-transmitting portion 4 can be totally reflected by the refractive index difference at the interface between the light-transmitting portion 4 and the louver 3. More specifically, the molding material 30 is selected so that the refractive index difference between the light-transmitting portions 4 and the louvers 3 is 0.1 or more (the refractive index n3 of the louvers 3 is 0.1 lower than the refractive index n4 of the light-transmitting portions 4). This makes it possible to form the optical functional layer 2 that can control the direction of light using total reflection due to the refractive index difference.

Instead of a UV-curable ink, a colored optical clear resin (OCR), which is a UV-curable OCR colored with a dye or a pigment, can be used as the molding material 30. Alternatively, in a case where light is totally reflected at the interface between the light-transmitting portion 4 and the louver 3 due to the refractive index difference, as described above, an optically transparent low-refractive index UV-curable OCR with a refractive index smaller than that of the resin forming the light-transmitting portions 4 can be used. Alternatively, a thermosetting molding material can also be used instead of a UV-curable molding material. For example, a thermosetting OCR may be used instead of a UV-curable OCR. In this case, in the third step S3, heat treatment is performed instead of UV light irradiation. Alternatively, a two-component mixture curable molding material can also be used. In this case, for example, in the second step S2, two liquids such as a main agent and a curing agent are mixed and promptly applied to the first convex portions 11 or the second convex portions 21, and in the third step S3, the mixture is reacted and cured under predetermined reaction conditions.

### (Operation Effects)

As described above, in the present embodiment, the louver film 1 with the optical functional layer 2 in which the light-transmitting portions 4 and the light-absorbing louvers 3 are alternately aligned is manufactured by performing the first step S1, second step S2, and third step S3 described above. In this way, when the first member 10 and the second member 20 are laminated together, the louver 3 is formed using the gap 40 created between the first convex portion 11 and the second convex portion 21, so that the flexibility in the shape and inclination angle of the louvers 3 is increased. For example, it is possible to form the gap 40 in an undercut shape or form the gap 40 with a large inclination angle relative to the thickness direction of the optical functional layer 2. Even in such cases, the difficulty in manufacturing the first member 10 and the second member 20 does not increase. Accordingly, the flexibility in the shape and inclination of the louvers 3 can be increased, while avoiding the increased manufacturing difficulty.

In such a manufacturing method, the shape accuracy of the louvers 3 is approximately equal to the shape accuracy of the first convex portions 11 and the second convex portions 21. Accordingly, the shape accuracy of the louvers 3 can be improved compared with the manufacturing method in which a resin is filled on the coating film after the light-absorbing coating film is formed. Furthermore, it is easy to increase the size of the louver film 1. In addition, after molding the louvers 3, the first light-transmitting layer 5 and the second light-transmitting layer 6 can be used as they are as protective layers that cover the optical functional layer 2. A step of separately providing a protective layer covering the optical functional layer 2 therefore can be omitted.

In the present embodiment, a plurality of first convex portions 11 have the same shape, and a plurality of second convex portions 21 have the same shape. Furthermore, the array pitch of the first convex portions 11 and the second convex portions 21 is an equal pitch D. With this configuration, the optical functional layer 2 in which the louvers 3 of the same shape are arranged at an equal pitch D can be formed.

In the present embodiment, the first convex portion 11 is the first prism having a triangular cross-sectional shape with the first face 12 and the second face 13. The second convex portion 21 is the second prism having a triangular cross-sectional shape with the third face 22 and the fourth face 23. In the two prisms, the inclination angle R1 of the first face 12 with respect to the first light-transmitting layer 5 is the same as the inclination angle R3 of the third face 22 with respect to the second light-transmitting layer 6. On the other hand, the inclination angle R2 of the second face 13 with respect to the first light-transmitting layer 5 is different from the inclination angle R4 of the fourth face 23 with respect to the second light-transmitting layer 6. This shape setting allows the formation of the gap 40 with a wedge-shaped cross-sectional shape to form the louver 3 with a wedge-shaped cross-sectional shape.

In the present embodiment, the louver 3 having a wedge-shaped cross-sectional shape produces a light control effect different from that of the louver 3 with a constant thickness. For example, unlike a light control effect in which the amount of light transmitted changes abruptly before and after a specific angle of incidence, the amount of light transmitted changes gradually as the angle of incidence changes, producing a light control effect that gradually darkens or brightens. In addition, compared with the louver 3 with a constant thickness, the longer peripheral distance and smaller volume allow UV light or the like to be transmitted more efficiently. Thus, the risk of uncured molding material 30 remaining in the gap 40 can be reduced.

In the manufacturing method of the present embodiment, the shape, inclination angle, thickness, and the like of the louver 3 can be set to various angles and dimensions by setting the inclination angle of each face and the protruding height of the first and second prisms as appropriate. The flexibility in the shape and inclination of the louver 3 is therefore high. For example, the cross-sectional shape of the louver 3 is not necessarily wedge-shaped, but may be plate-shaped with a constant thickness, or rectangular or rhombic, as described below. The array pitch of the louvers 3 can also be changed as appropriate.

At least one or more of the first convex portions 11 may be shaped differently, and at least one or more of the second convex portions 21 may be shaped differently. With this configuration, the optical functional layer 2 including louvers 3 with different shapes or different inclination angles can be formed. In addition, the optical functional layer 2 can be formed such that the array pitch of the louvers 3 is an unequal pitch. In the manufacturing method of the present embodiment, the manufacturing difficulty remains the same even when louvers 3 with different shapes, inclination angles, and different array pitches are included.

The shape of the first convex portion 11 and the second convex portion 21 is not limited to a prism shape with a triangular cross section. The first convex portion 11 and the second convex portion 21 may be shaped such that when the second convex portion 21 is inserted into the valley between adjacent first convex portions 11, a part of the surface of the second convex portion 21 is in surface contact with a part of the surface of the first convex portion 11. When the first convex portion 11 and the second convex portion 21 are brought into surface contact with each other, the light-transmitting portion 4 can be formed. For example, as described below, the cross-sectional shape of the first convex portion 11 and the second convex portion 21 may be trapezoidal or other polygonal shapes. The first convex portion 11 and the second convex portion 21 may have a shape including a curved surface.

### (Modification of Manufacturing Method for First and Second Members)

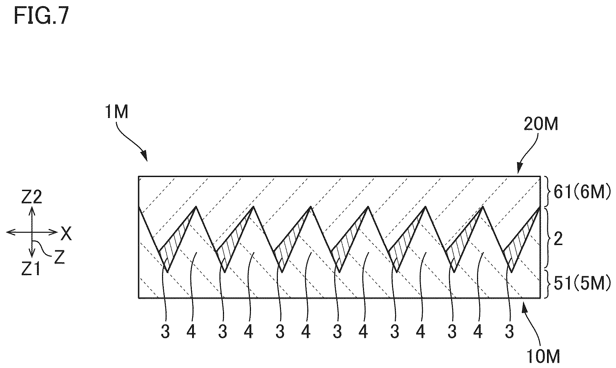

FIG. 7 illustrates a louver film 1M manufactured using a first member 10M and a second member 20M manufactured by extrusion molding. The louver film 1M illustrated in FIG. 7 includes a first light-transmitting layer 5M, the optical functional layer 2, and a second light-transmitting layer 6M. The first light-transmitting layer 5M includes only a single layer, the first base layer 51, formed integrally with parts of the light-transmitting portions 4. The second light-transmitting layer 6M includes only a single layer, the second base layer 61, formed integrally with parts of the light-transmitting portions 4.

The first member 10M and the second member 20M can be manufactured by extrusion molding. Extrusion molding can be manufactured, for example, using a mold member in which grooves with the inverted shape of the first convex portions 11 or the second convex portions 21 are aligned on the surface at an equal pitch D. When a pressure roll is used as a mold member, a heated and melted resin material such as polycarbonate (PC), polymethyl methacrylate (PMMA), or methyl methacrylate-styrene copolymer (MS) is continuously extruded to form a film, the extruded film is sandwiched between a pressure roll with grooves on its surface and a support roll facing the pressure roll, and the film is passed between the rolls by rotating the pressure roll. As a result, the shape of the first convex portions 11 or the second convex portions 21 is transferred to the film surface.

In this manufacturing method, the first member 10M and the second member 20M are each formed of a single resin such as PC, PMMA, or MS. In the second step S2, therefore, the first member 10M and the second member 20M formed of a single resin are laminated together. The completed louver film 1M is entirely made of a single resin, such as PC, PMMA, or MS, except for the louvers 3. A protective layer or other functional layers may be joined to each of the first base layer 51 and the second base layer 61 in a step subsequent to the extrusion molding.

### (Modifications of Shape and Arrangement of Louvers)

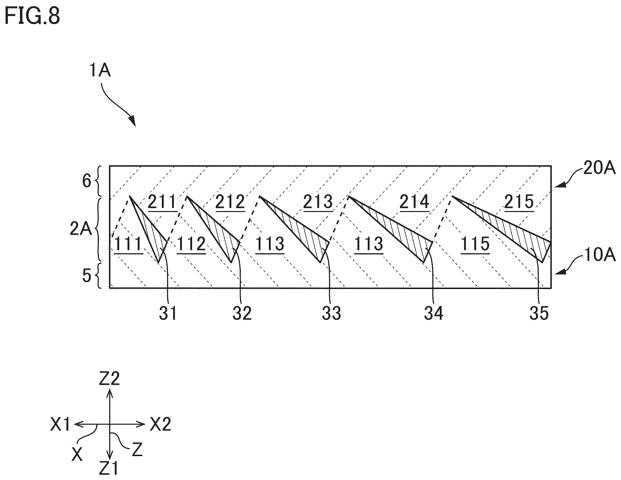

The shape and arrangement of the louvers 3 that can be manufactured by the manufacturing method of the present embodiment are not limited to the shape and arrangement illustrated in FIG. 1. Various modifications with different shapes and arrangements of louvers are described below. In FIGS. 8 to 11, the first light-transmitting layer 5 and the second light-transmitting layer 6 are not depicted as having a base layer and a substrate layer separately for simplicity of explanation, but when 2P molding is used as the manufacturing method, a two-layer structure similar to that of FIG. 1 is formed.

### (First Modification)

FIG. 8 is a cross-sectional view of a louver film 1A of a first modification. The louver film 1A includes an optical functional layer 2A. The optical functional layer 2A includes wedge-shaped louvers 31, 32, 33, 34, and 35 arranged in the X direction. A plurality of louvers 31, 32, 33, 34, and 35 differ from each other in cross-sectional shape and inclination angle with respect to a light incident plane. More specifically, the louvers 31, 32, 33, 34, and 35 increase in inclination angle and length from one side (X1 direction in FIG. 8) toward the other side (X2 direction in FIG. 8) of their array direction. The light control effect of the louver film 1A therefore varies with the position of incidence in the X direction.

The method of manufacturing the louver film 1A is the same as that of the first embodiment, except for the shape of a first member 10A and a second member 20A. The first member 10A includes a plurality of first convex portions 111, 112, 113, 114, and 115 that differ in shape from each other. The first convex portions 111, 112, 113, 114, and 115 have the same slope inclination angle in the X1 direction, and the slope inclination angle in the X2 direction increases toward the X2 direction. The second member 20A includes a plurality of second convex portions 211, 212, 213, 214, and 215 that differ in shape from each other. The second convex portions 211, 212, 213, 214, and 215 have the same slope inclination angle in the X2 direction, and the slope inclination angle in the X1 direction increases toward the X2 direction. In this configuration, in the second step S2, wedge-shaped gaps are formed with an inclination angle gradually increasing toward the X2 direction.

The first member 10A and the second member 20A can be manufactured, for example, using a mold member in which grooves of different shapes are aligned in a certain direction.

### (Second Embodiment)

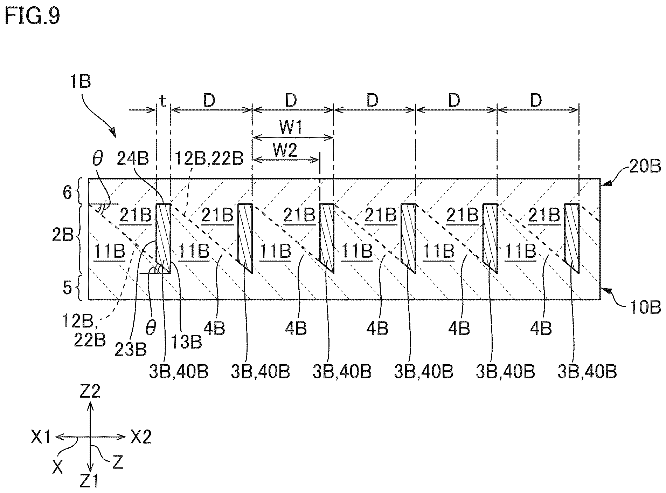

FIG. 9 is a cross-sectional view of a louver film 1B of a second embodiment. The louver film 1B includes an optical functional layer 2B in which louvers 3B and light-transmitting portions 4B are alternately aligned in the X direction. The louvers 3B have the same shape and are arranged at an equal pitch D. The cross-sectional shape of each louver 3B is not wedge-shaped but is plate-shaped with a constant thickness. Each louver 3B is perpendicular to the optical functional layer 2B and perpendicular to the light incident plane. The thickness t of each louver 3B is suitable to be 3 µm or more. When a colored OCR is used, the required light control function can be obtained by setting the thickness t to 3 µm.

Even when the louvers have a wedge-shaped cross-sectional shape as in the first embodiment and first modification above, it is suitable to set the thickness of at least a part of each louver to 3 µm or more to ensure the light control function if a colored OCR is used.

The method of manufacturing the louver film 1B is the same as in the first embodiment, except for the shape of the first member 10B and the second member 20B. The first member 10B includes a plurality of first convex portions 11B protruding from the first light-transmitting layer 5. The first convex portion 11B is a first prism with a right-angled triangular cross-sectional shape. The first convex portion 11B (first prism) has a first face 12B and a second face 13B. The second face 13B is perpendicular to the first light-transmitting layer 5. Similarly, the second member 20B includes a plurality of second convex portions 21B protruding from the second light-transmitting layer 6. The second convex portion 21B is a second prism with a right-angled triangular cross-sectional shape. The second convex portion 21B (second prism) has a third face 22B and a fourth face 23B. The fourth face 23B is perpendicular to the second light-transmitting layer 6.

The first convex portion 11B and the second convex portion 21B are similar in size, and the inclination angle θ of the first face 12B with respect to the first light-transmitting layer 5 is the same as the inclination angle θ of the third face 22B with respect to the second light-transmitting layer 6. The first convex portion 11B and the second convex portion 21B are arranged at the same pitch, but the width W2 of the base of the second convex portion 21B is narrower than the width W1 of the base of the first convex portion 11B. Therefore, a fifth face 24B is formed between adjacent second convex portions 21B along the array direction X of the second convex portions 21B. The fifth face 24B constitutes a surface of the second light-transmitting layer 6.

In the second embodiment, in the second step S2, when the second convex portion 21B is inserted into the valley between adjacent first convex portions 11B so that the first face 12B and the third face 22B come into contact with each other, a gap 40B having a constant width t and being perpendicular to the first light-transmitting layer 5 and the second light-transmitting layer 6 is formed between the second face 13B and the fourth face 23B.

Since the louvers 3B of a uniform thickness can be formed in the second embodiment, it is possible to achieve a light control effect in which the amount of light transmitted changes abruptly before and after a specific angle of incidence. In addition, since the louvers 3B can be formed in a shape perpendicular to the first light-transmitting layer 5 and the second light-transmitting layer 6, the optical functional layer 2B can be formed with the louvers 3 perfectly perpendicular to the light incident plane.

### (Second Modification)

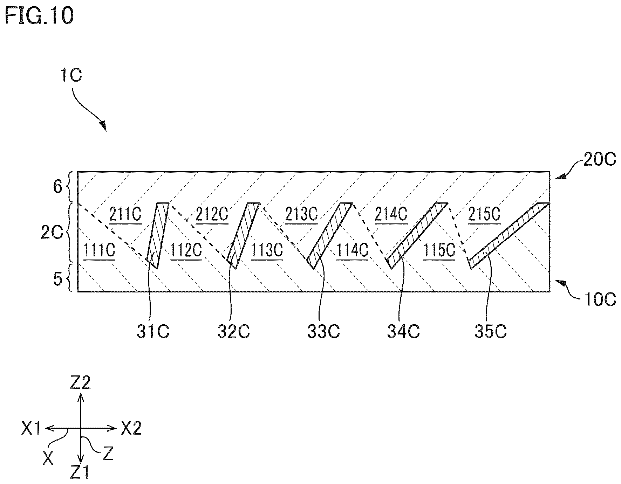

FIG. 10 is a cross-sectional view of a louver film 1C of a second modification. The louver film 1C includes an optical functional layer 2C. The optical functional layer 2C includes plate-shaped louvers 31C, 32C, 33C, 34C, and 35C arranged in the X direction. The louvers 31C, 32C, 33C, 34C, and 35C increase in inclination angle and length from one side (X1 direction in FIG. 10) toward the other side (X2 direction in FIG. 10) of their array direction, in the same manner as in the first modification. The light control effect of the louver film 1C therefore varies with the position of incidence in the X-direction.

The method of manufacturing the louver film 1C is the same as in the first and second embodiments, except for the shape of a first member 10C and a second member 20C. The first member 10C includes a plurality of first convex portions 111C, 112C, 113C, 114C, and 115C that differ in shape from each other. The first convex portions 111C, 112C, 113C, 114C, and 115C have the same slope inclination angle in the X2 direction, and the slope inclination angle in the X1 direction increases toward the X2 direction. The second member 20C includes a plurality of second convex portions 211C, 212C, 213C, 214C, and 215C that differ in shape from each other. The second convex portions 211C, 212C, 213C, 214C, and 215C have the same slope inclination angle in the X1 direction, and the slope inclination angle in the X2 direction increases toward the X2 direction. In this configuration, in the second step S2, gaps with a constant width are formed with an inclination angle gradually increasing toward the X2 direction.

The first member 10C and the second member 20C can be manufactured using a mold member in which grooves of different shapes are aligned in a certain direction, in the same manner as in the second modification.

### (Third Embodiment)

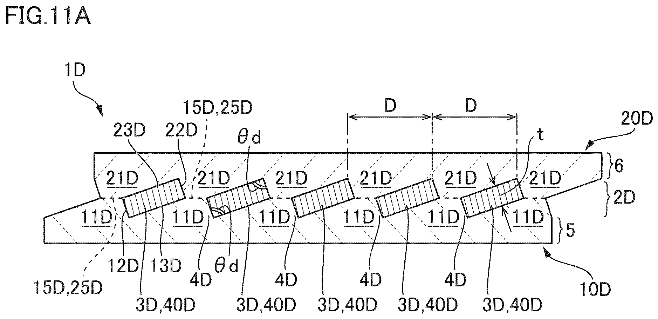

FIG. 11(a) is a cross-sectional view of a louver film 1D of a third embodiment. The louver film 1D includes an optical functional layer 2D in which louvers 3D and light-transmitting portions 4D are alternately aligned in the X direction. The louvers 3D have the same shape and are arranged at an equal pitch D. The cross-sectional shape of each louver 3D is rectangular. The length (thickness) t of the short side of each louver 3D is suitable to be 3 µm or more. As already explained, this dimension is to impart a necessary light control function to the louvers 3D made of a colored OCR.

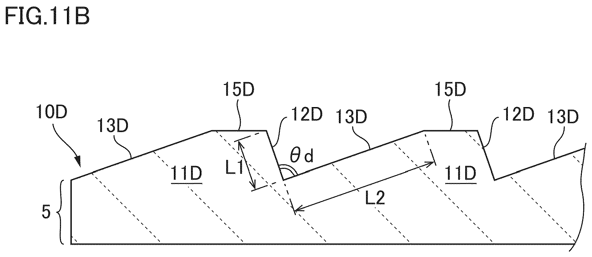

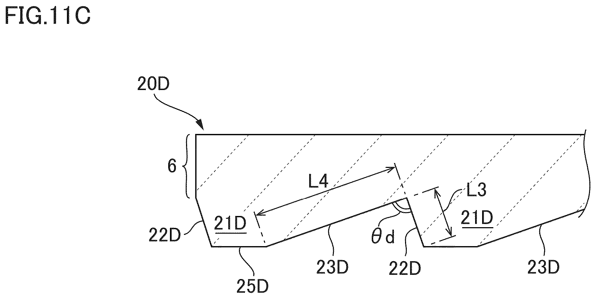

FIG. 11(b) is a partially enlarged cross-sectional view of a first member 10D. FIG. 11(c) is a partially enlarged cross-sectional view of a second member 20D. The method of manufacturing the louver film 1D is the same as in the first and second embodiments, except for the shape of the first member 10D and the second member 20D. The first member 10D includes the first light-transmitting layer 5 and a plurality of first convex portions 11D protruding from the first light-transmitting layer 5. The first convex portion 11D is a first prism with a trapezoidal cross-sectional shape. The first convex portion 11 (first prism) has a first upper base surface 15D parallel to the first light-transmitting layer 5, a first slope 12D extending from one end of the first upper base surface 15D to the first light-transmitting layer 5, and a second slope 13D extending from the other end of the first upper base surface 15D to the first light-transmitting layer 5.

In the first convex portion 11 (first prism), the inclination angle of the first slope 12D with respect to the first light-transmitting layer 5 is different from the inclination angle of the second slope 13D with respect to the first light-transmitting layer 5. The length L1 of the first slope 12D is therefore different from the length L2 of the second slope 13D. The shape of the first convex portion 11D is suitable if the length L2 of the second slope 13D is 2 or more and 5 or less, where the length L1 of the first slope 12D is 1. The angle θd between the first slope 12D and the second slope 13D is suitable to be 90° (right angle).

The second member 20D has the same shape as the first member 10D and is used in inverted orientation. The second member 20D includes the second light-transmitting layer 6 of the same thickness as the first light-transmitting layer 5 and a plurality of second convex portions 21D protruding from the second light-transmitting layer 6. The second convex portion 21D is a second prism with a trapezoidal cross-sectional shape. The second convex portion 21D (second prism) has the same shape as the first convex portion 11. In other words, the second convex portion 21D has a second upper base surface 25D of the same length as the first upper base surface 15D, a third slope 22D connected to one end of the second upper base surface 25D, and a fourth slope 23D connected to the other end of the second upper base surface 25D. The length L3 of the third slope 22D is the same as the length L1 of the first slope 12D of the first member 10D. The length L4 of the fourth slope 23D is the same as the length L2 of the second slope 13D of the first member 10D. The angle between the third slope 22D and the fourth slope 23D is the same as the angle θd between the first slope 12D and the second slope 13D, which is 90° (right angle).

In the third embodiment, in the second step S2, the second upper base surface 25D of the second convex portion 21D is brought into contact with the first upper base surface 15D of each of the first convex portions 11D. As a result, a light-transmitting portion 4D is formed by the first convex portion 11D and the second convex portion 21D, and at the same time, a gap 40D with a rectangular cross-sectional shape surrounded by the first slope 12D and the third slope 22D facing each other and by the second slope 13D and the fourth slope 23D facing each other can be formed between adjacent light-transmitting portions 4D. As a result, the louver 3D has a rectangular cross-sectional shape with a thickness constant to its end, so that the amount of light transmitted changes abruptly before and after a specific angle of incidence, producing a light control effect that switches light incidence on and off.

In the third embodiment, since the cross-sectional shape of the first convex portion 11D and the second convex portion 21D is trapezoidal, the width of the light-transmitting portion 4D between adjacent louvers 3D can be increased. The lengths of the first upper base surface 15D and the second upper base surface 25D are both suitable to be 1 µm or more and 100 µm or less. With this configuration, the light-transmitting portions 4D with various widths can be formed, making it possible to form the optical functional layer 2D that can be used for various applications.

In the third embodiment, the first convex portion 11D and the second convex portion 21D have the same shape, and the first member 10D and the second member 20D have the same shape. This configuration reduces the number of types of members to be manufactured, thereby reducing management costs. In addition, the number of types of molds used in the manufacturing can be reduced, thereby reducing manufacturing costs.

In the third embodiment, the shapes of the first convex portion 11D and the second convex portion 21D are set so that the dimensional ratio between the short side and the long side of the louver 3D (dimensional ratio L1:L2 of the first slope 12D and the second slope 13D, and dimensional ratio L3:L4 of the third slope 22D and the fourth slope 23D) is in the range 1:2 to 5. By setting the dimensional ratio between the short side and the long side to this extent, the thickness of the louver 3D can be ensured, and the change in the amount of light transmitted in light control can be increased.

### (Third and Fourth Modifications)

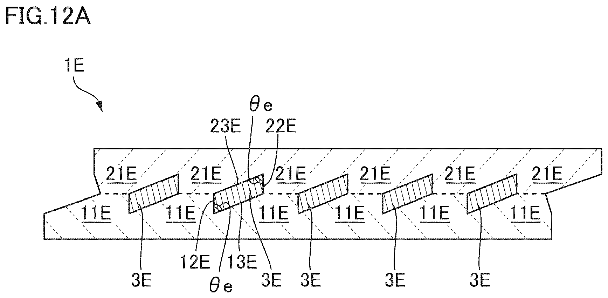

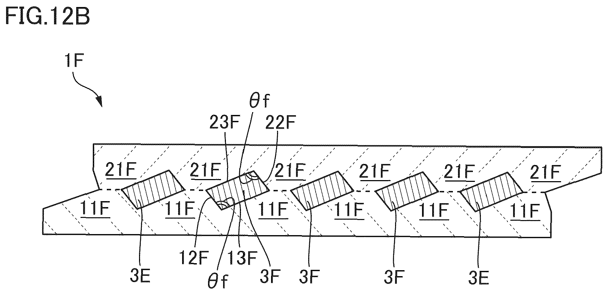

FIG. 12(a) is a cross-sectional view of a louver film 1E of a third modification. FIG. 12(b) is a cross-sectional view of a louver film 1F of a fourth modification. In the third embodiment, the cross-sectional shape of the louver 3D is rectangular and all the corners are 90°. However, this angle is not limited to 90° and may be in the range from 60° to 120°.

As illustrated in FIG. 12(a), in the louver film 1E, the angle θe between a first slope 12E and a second slope 13E in a first convex portion 11E and the angle θe between a third slope 22E and a fourth slope 23E in a second convex portion 21E are acute angles of 60° or more. In this case, the other two corners are obtuse angles of 120° or less. The cross-sectional shape of a louver 3E is therefore rhombic.

As illustrated in FIG. 12(b), in the louver film 1F, the angle θf between a first slope 12F and a second slope 13F in a first convex portion 11F and the angle θf between a third slope 22F and a fourth slope 23F in a second convex portion 21F are obtuse angles of 120° or less. In this case, the other two corners are acute angles of 60° or more. In this case, therefore, the cross-sectional shape of the louver 3F is also rhombic.

The louvers 3E and 3F have corner angles close to 90° (60° or more and 120° or less). Even with a rhombic shape, therefore, it is possible to form an optical functional layer that can abruptly change the amount of light transmitted at a specific angle of incidence.

### (Other Embodiments)

In each of the foregoing embodiments and modifications thereof, the first and second convex portions extend linearly in a direction orthogonal to the array direction, but the planar shape of the first and second convex portions may be formed in a shape such as an annular or curved shape, rather than being linear. In this way, an optical functional layer with louvers having an annular or curved planar shape can be formed. For example, an optical functional layer with annular louvers arranged concentrically can be formed.

## Claims

1. A method of manufacturing a louver film with an optical functional layer in which light-transmitting portions and louvers are alternately aligned, the method comprising:
a first step of manufacturing a first member and a second member, the first member including a first light-transmitting layer and a plurality of first convex portions protruding from the first light-transmitting layer, the second member including a second light-transmitting layer and a plurality of second convex portions protruding from the second light-transmitting layer and aligned at a same array pitch as the first convex portions;
a second step of, when supplying a molding material between the first member and the second member to laminate the first member and the second member together, bringing the second convex portions into contact with the first convex portions, respectively, to form the light-transmitting portions aligned at the array pitch and form a gap filled with the molding material between the light-transmitting portions adjacent to each other; and
a third step of curing the molding material to form the louvers between the first light-transmitting layer and the second light-transmitting layer, each of the louvers having a shape matching the gap.

2. The method of manufacturing a louver film according to claim 1, wherein the array pitch is 5 µm or more and 500 µm or less.

3. The method of manufacturing a louver film according to claim 1, wherein
in the first step,
a UV-curable resin is supplied to a first mold surface with an inverted shape of the first convex portions aligned, cured under pressure through a first substrate layer, and then released from the first mold surface to form the first light-transmitting layer in a two-layer structure in which the first substrate layer is joined to a first base layer integrally formed with the first convex portions, and
a UV-curable resin is supplied to a second mold surface with an inverted shape of the second convex portions aligned, cured under pressure through a second substrate layer, and then released from the second mold surface to form the second light-transmitting layer in a two-layer structure in which the second substrate layer is joined to a second base layer integrally formed with the second convex portions.

4. The method of manufacturing a louver film according to claim 3, wherein both the first base layer and the second base layer have a thickness of 100 µm or less.

5. The method of manufacturing a louver film according to claim 1, wherein the molding material is a UV-curable ink with a bonding function or an adhesive function.

6. The method of manufacturing a louver film according to claim 1, wherein at least a part of the louver has a thickness of 3 µm or more.

7. The method of manufacturing a louver film according to claim 1, wherein
each of the first convex portions is a first prism having a triangular cross-sectional shape with a first face and a second face intersecting the first face,
each of the second convex portions is a second prism having a triangular cross-sectional shape with a third face and a fourth face intersecting the third face,
an inclination angle of the first face with respect to the first light-transmitting layer is same as an inclination angle of the third face with respect to the second light-transmitting layer, and
in the second step, the first face and the third face are brought into contact with each other to form the gap between the second face and the fourth face.

8. The method of manufacturing a louver film according to claim 7, wherein
an inclination angle of the second face with respect to the first light-transmitting layer is different from an inclination angle of the fourth face with respect to the second light-transmitting layer, and
in the second step, the gap having a wedge-shaped cross-sectional shape surrounded by the second and fourth faces is formed.

9. The method of manufacturing a louver film according to claim 7, wherein
the second face is perpendicular to the first light-transmitting layer, and the fourth face is perpendicular to the second light-transmitting layer, and
in the second step, the gap having a constant width and being perpendicular to the first and second light-transmitting layers is formed between the second face and the fourth face.

10. The method of manufacturing a louver film according to any one of claims 7 to 9, wherein both the first prism and the second prism have a vertex angle greater than 10°.

11. The method of manufacturing a louver film according to claim 1, wherein
each of the first convex portions is a first prism having a trapezoidal cross-sectional shape with a first upper base surface, a first slope connected to one end of the first upper base surface, and a second slope connected to another end of the first upper base surface,
each of the second convex portions is a second prism having a trapezoidal cross-sectional shape with a second upper base surface of a same length as the first upper base surface, a third slope connected to one end of the second upper base surface, and a fourth slope connected to another end of the second upper base surface, and
in the second step, the second upper base surface of the second prism is brought into contact with the first upper base surface of the first prism to form the gap surrounded by the first and third slopes facing each other and by the second and fourth slopes facing each other.

12. The method of manufacturing a louver film according to claim 11, wherein the first prism and the second prism have a same shape.

13. The method of manufacturing a louver film according to claim 11, wherein an angle between the first slope and the second slope and an angle between the third slope and the fourth slope are both 60° or more and 120° or less.

14. The method of manufacturing a louver film according to claim 11, wherein
an angle between the first slope and the second slope and an angle between the third slope and the fourth slope are both 90°, and
the second slope and the fourth slope each have a length of 2 or more and 5 or less, where the first slope and the third slope each have a length of 1.

15. The method of manufacturing a louver film according to claim 11, wherein both the first upper base surface and the second upper base surface have a length of 1 µm or more and 100 µm or less.
